## Europäisches Patentamt

## European Patent Office

## Office européen des brevets

(19)

(11) Publication number: **0 082 690**
**B1**

(12) **EUROPEAN PATENT SPECIFICATION**

(45) Date of publication of patent specification: **03.12.86**

(51) Int. Cl.⁴: **H 04 B 1/59,** G 01 S 13/80

(21) Application number: **82306750.9**

(22) Date of filing: **17.12.82**

(54) Transmitter/responder systems.

(30) Priority: **18.12.81 GB 8138270**
**01.12.82 GB 8234163**

(43) Date of publication of application:
**29.06.83 Bulletin 83/26**

(45) Publication of the grant of the patent:
**03.12.86 Bulletin 86/49**

(84) Designated Contracting States:
**AT BE CH DE FR IT LI LU NL SE**

(56) References cited:
**EP-A-0 006 691**
**AT-B- 253 560**
**DE-A-2 453 647**
**DE-A-2 642 022**
**DE-B-1 946 247**
**DE-B-2 535 410**
**US-A-3 898 619**
**US-A-3 945 006**
**US-A-4 063 173**
**SIEMENS ZEITSCHRIFT, 44. Jahrgang, Februar
1970, Heft 2, Braunschweig. H. GÖTZ
"Mikrowellensystem zum automatischen
Lesen von Eisenbahnwaggonnummern" pages
55-60**

(73) Proprietor: **SENELCO LIMITED
Dormey House Upton Road
Slough Berkshire SL1 2AD (GB)**

(72) Inventor: **Wood, David Harold
Dean House Broom Hill
Stoke Poges Buckinghamshire (GB)**
Inventor: **Creswick, Martin
38 Oakland Way
Flackwell Heath Buckinghamshire (GB)**

(74) Representative: **Jukes, Herbert Lewis et al
Swann, Elt & Company 31 Beaumont Street
Oxford OX1 2NP (GB)**

## Description

It is known that a signal transmitted from first apparatus can cause second apparatus (a responder) to transmit a signal receivable by said first apparatus, so as to enable said first apparatus to detect the presence of said responder.

Responders are described in various published documents. Some examples of those documents are the specifications published in various patent applications or patents, for instance

European specification EP 0006691 AI;

Austrian specification AT 253560;

German specifications 1946247, 2453647, 2535410, 2642022;

US specifications 3945006, 4063173.

An example of published technical literature is an article in Siemens Zeitschrift, 44, year February 1970, Volume 2, Braunschweig, Germany, relating to a microwave system for automatic reading of railway waggon numbers.

None of the above mentioned examples of published documents discloses a responder, comprising:

(a) receiver means for receiving a transmitted signal S1 comprising a frequency f1;

(b) generator means for generating a carrier frequency f2 of a carrier component of a transmittable signal S2 comprising carrier frequency f2 and code;

(c) logic means for enabling signal S2 to be in mathematical relationship with signal S1, said logic means comprising:

(i) at least one memory means adapted to be programmed for storing code, or storing said code,

(ii) at least one modulation means for modulating said carrier component of signal S2, the modulation being under control of at least a portion of said stored code, such that signal S2 will be in coded mathematical relationship with signal S1,

(iii) at least one clock means for providing at least one clocking signal for enabling or disenabling access of at least a portion of said stored code to said at least one modulation means.

For convenience of description, a responder having the above features (a), (b), (c) is termed herein a responder as herein defined.

US patent specification 3898619 discloses a responder comprising:

receiver means for receiving a transmitted signal;

generator means for generating a carrier component of a transmittable signal;

logic means for enabling the transmittable signal to be in mathematical relationship with the received signal,

the logic means comprising:

(i) at least one memory means for storing code,

(ii) at least one modulation means for modulating the carrier component, the modulating being under control of at least a portion of the stored code such that the transmittable signal will be in coded mathematical relationship with the received signal

(iii) clock means as above; and

(d) transmitter means for transmitting the transmittable signal.

In US patent specification 3898619, however, the memory means is a diode matrix programmed in its manufacture. The diode matrix is not capable of having code written thereinto by a programming signal. Furthermore, the diode matrix is a read only memory by virtue of connection at preselected portions in the matrix.

A first aspect of the present invention provides a responder, comprising:

(a) receiver means ($R_2$) for receiving a transmitted signal S1 comprising a frequency f1;

(b) generator means (76) for generating a carrier frequency f2 of a carrier component of a transmittable signal S2 comprising carrier frequency f2 and code;

(c) logic means ($L_2$) for enabling signal S2 to be in mathematical relationship with signal S1, said logic means comprising:

(i) at least one memory means (60), adapted to be programmed for storing code, or storing said code,

(ii) at least one modulation means (65, 78) for modulating said carrier component of signal S2, the modulation being under control of at least a portion of said stored code, such that signal S2 will be in coded mathematical relationship with signal S1,

(iii) at least one clock means (61, 62, 63) for providing at least one clocking signal for enabling or disenabling access of at least a portion of said stored code to said at least one modulation means;

characterised by said at least one memory means is adapted to be programmed or reprogrammed with said code by receiving at least one programming signal to be provided by non-physical linkage between said responder and at least one source of said at least one programming signal, said at least one programming signal comprising code to be routed to said at least one memory means so as to provide said stored code.

It should be noted that the term "responder" in the present invention does not imply any restrictions to any particular application, other than that the responder must be embodied in a manner suitable for any particular application to which the responder is to be put. Said responder of the present invention can be utilised in any suitable application(s) for at least one purpose. One example of a purpose is for receiver/transmitter for identifying the presence of said responder. Another example of a purpose is when said responder is a temporary store or register of information. A further purpose is when said responder is a transducer.

A second aspect of the present invention provides apparatus, comprising:

at least one responder according to the first aspect of the invention; and

transmitter means for transmitting at least one signal S1 to at least one said responder.

A third aspect of the present invention provides an identification or security system, characterised by at least one responder according to the first aspect of the invention; or by at least one apparatus according to the second aspect of the invention.

Any feature of the first and second aspects of the present invention can comprise at least one discrete component and/or at least one integrated circuit, e.g. for processing at least a portion of data for and/or provided by features (a), (b), (c), (d). CMOS integrated circuitry is convenient for a battery energised responder. Said responder can comprise at least one microprocessor for processing at least a portion of data for and/or provided by at least one of features (a), (b), (c), (d). For many applications, it is preferred that a said responder comprises a said single integrated circuit.

Said receiver means (a) can be adapted to respond to a signal S1 containing at least one predetermined portion of the electromagnetic spectrum of frequencies. Signal S1 can comprise a carrier continuous electromagnetic wave, e.g. such a wave that has a radio frequency or is laser generated. Alternatively, signal S1 can comprise an ultrasonic wave. In general, signal S1 can be embodied in any suitable manner(s). Preferably, signal S1 contains code to which said at least one memory means can respond.

At least a portion of code from a coded signal S1, or from another source, can be utilised for providing said at least one memory means with storable code, and/or for modifying at least a portion of code when already stored by said at least one memory means, and/or for replacing at least a portion of said stored code. Said at least one memory means can be adapted to retain stored code (unless said stored code is deliberately purged from said at least one memory means) for at least the useable life of a limited life source of enery for energising said responder, e.g. a battery, capacitor, or supplies to a fuel cell. Said at least one memory means can be adapted to warn when at least a predetermined portion of any said life has expired.

In general, transmitted coded signal(s) S1 can serve various purposes, e.g. as mentioned above. Transmitted coded signal(s) S1 can be used for programming said at least one memory means with at least a portion of initial said stored code. In general, any signal received by said at least one memory means so as to provide said at least one memory means with stored code is a programming signal. Transmitted coded signal(s) S1 can be used in interrogating a responder, or in enabling a responder to interrogate apparatus providing transmitted coded signal(s) S1. For example, that interrogation can enable said at least one modulation means to enable, disenable, or change modulation of signal S2, depending on the reaction of said logic means. Thus, a responder can be interrogatable and/or be an interrogator.

Said generator means can be embodied in any suitable manner(s), e.g. comprise a programmable divider.

Said at least one memory means can be adapted to receive at least one initial programming signal providing at least a portion of said stored code. Such a signal can come from at least one source not part of said responder, and/or from at least one source that is part of said responder. For example, first transmitter means for transmitting coded signal(s) S1 can provide initially said stored code; and second transmitter means (e.g. a part of a base station or other suitable sensor apparatus of signal S2) can provide coded signal(s) S1 after said initial stored code has entered said at least one memory means. Said first transmitter means can be programmer apparatus. Preprogramming or reprogramming of a responder can be carried out at e.g. a factory or service facility, or at a location of use of the responder, by utilising e.g. suitable coded signal(s) S1.

Said at least one memory means can comprise a plurality of memory sections each addressable by a respective one of a plurality of address lines to said generator means. Said plurality can be an even or odd number, e.g. 3. It will be appreciated that said generator means is reprogrammable depending on the effect(s) of said at least one modulation means.

Said logic means can be adapted for enabling or disenabling access of any said programming signal to said at least one memory means. Said logic means can be adapted for enabling or disenabling access of at least a portion of said stored code to signal S2.

Said logic means can comprise various control means, e.g. program delay means, counter means (e.g. at least one binary counter), gate means, and clock means.

Said logic means can comprise clock means for clocking said at least one memory means such that items of data provided as input to said at least one memory means are routed to respective ones of input section(s) of said at least one memory means. Said clock means can provide signal S3 as a signal for providing said clocking. That provision can be responsive to optional signal S4, e.g. S3 can correspond to or be modulation of a modulated signal S4. A source of signal S3 can be part of or not part of said responder. Frequency of any said carrier component of an electromagnetic wave S1 can be greater than the maximum frequency of said clocking of said at least one memory means. Gating to enable or disenable clocking can be provided in any suitable manner(s), e.g. by gate circuitry comprising at least one AND gate. Signal S4 can be generated in or otherwise provided to said responder, e.g. as an optional input to said responder. That further input can be provided in any suitable manner(s), e.g. via physical connection or through optional space separating said responder from a source of that input. Transmitter means or other suitable transmitter means can transmit signal S4. Signal S4 can be a modulated signal.

Logic means can comprise suitable gate circuitry for any said purpose of said logic means.

Said gate circuitry is preferably adapted to be partly controllable by at least a plurality of signals derived in said responder from signal S1, wherein:

(a) a first derived signal from coded signal S1 is a derived frequency derivative of a carrier frequency of that signal S1; and

(b) a second derived signal from that coded signal S1 is demodulation from that signal.

Said gate circuitry can be adapted to be partly controllable by at least a portion of signal S3 receivable optionally by said gate circuitry. For example, said gate circuitry can have 3 inputs, each respectively for said first and second derived signals and for signal S3; and an output for addressing said at least one memory means. Said gate circuitry can enable said access to said at least one memory means, such that said second derived signal provides data input to said at least one memory means; and signal S3 provides clock pulses to said at least one memory means so as to enable or disenable entry of that data into said at least one memory means. Signal S2 can be higher in frequency than signal S3, or have any other suitable relationship with signal S3.

Said mathematical relationship can comprise at least one variable. For example, when each of signals S1, S2 has a respective carrier component (e.g. frequency of a respective carrier continuous electromagnetic wave) and a respective code component (e.g. modulation of said wave), signal S2 can be varied by changing the frequency component and/or code component of signal S1. Preferably, change in the code component of signal S1 produces change in the carrier component of signal S2 (e.g. change in frequency of a carrier continuous electromagnetic wave). In one example, signal S1 has a carrier frequency f1 modulated by code, signal S2 has a carrier frequency f2 modulated by code (preferably the same code as that of S1), and frequencies f1, f2 are preferably characterised by:

$$\frac{f1}{f2}=n$$

in which n is any whole or fractional number other than zero, n being greater or less than zero, e.g. substantially 2. Preferably, said carrier frequencies are frequencies of suitable electromagnetic waves. Said codes can be any suitable codes, and be the same or different. Preferably, a said code contains data in a predetermined arithmetic, e.g. a binary arithmetic, for instance simple binary code, or ASCII code (i.e. American Standard Code for Information Interchange), or BCD code (i.e. Binary Coded Decimal arithmetic). It will be appreciated that said modulation can be provided in any suitable manner(s) dependent on the nature of the codes. Preferably, said modulation comprises any suitable pulse modulation. Pulse modulation can conform with any suitable waveforms required for signals S1, S2. Examples of pulse modulated signals S1, S2 are digitally modulated carrier continuous electromagnetic waves in the bandwidth 120 to 144 Kilo Herz. Any suitable bandwidths can be utilised and will depend on local licensing authorities.

Said transmitter means (d) of said responder can be adapted to transmit a signal S2 containing at least one predetermined portion of the electromagnetic spectrum of frequencies. Signal S2 can comprise a continuous carrier electromagnetic wave (see above), e.g. such a wave that has a radio frequency or is laser generated. Signal S2 can comprise an ultrasonic wave. In general, signal S2 can be embodied in any suitable manner(s).

Signals S1, S2 can be transmitted for any respective period(s) of time. Preferably, generation and/or transmission of signal S2 is in time phase with reception of signal S1. However, it is possible to provide signal S2 with at least one delay.

Said responder or said apparatus can comprise any suitable transducer means for receiving signal S1 or transmitting signal S2. Transducer means are well known for dealing with reception or propagation of electromagnetic waves, or reception or propagation of sonic waves (e.g piezoelectric transducers). Said responder or said apparatus can comprise at least one radiator (for instance an aerial) for receiving and/or transmitting any of signals S1, S2, S4 appropriately. A said aerial or a plurality of aerials (e.g. an array) can be fixed or tunable with respect of aerial characteristics (such tuning can be controlled in any suitable manner(s) e.g. by utilising said logic means). As an example, there can be a respective radiator for each signal S1, S2, S4, for instance respective wire coils (on ferrite cores) for signals S1, S2, and a printed loop for signal S4.

Said responder's receiver means and transmitter means can comprise respective tuned circuit(s). Said tuned circuits can be controlled in any suitable manner(s), e.g. by utilising said logic means.

Said responder can comprise display means for providing at least one display corresponding to at least a portion of at least one said signal. Said display means can be controlled in any suitable manner(s), e.g. by utilising said logic means.

Said responder can comprise means for changing at least one of the following parameters of said responder: receiver characteristic(s); reception time(s); transmission time(s); transmitter characteristic(s). Said changer means can be controlled in any suitable manner(s), e.g. by utilising said logic means.

Said responder can be utilised e.g. in an identification system or security system, e.g. for access control, stock control, identification of individuals (e.g. human, animal, or object—for instance a land, sea, or air vehicle). Said responder can have a capacity for storing at least one code at the same or different times. Said stored code enables a signal S2 to be a unique characterisation or unique identification of said responder, but that characterisation or identification can be changed by changing said stored code.

Said signal S2 can be sensed by at least one sensor means. Said sensor means can be embodied in any suitable manner(s), e.g. as discrete apparatus or as component(s) of apparatus. It will be appreciated that at least one responder and at least one sensor means can be part of e.g. an identity or security system, e.g. a plurality of sensor means can be spaced apart so as to respond (i.e. be latched to) at least one said responder. Said sensor means can be adapted to process data. Said sensor means can comprise and/or be adapted to interface with a computer system (see later below).

For apparatus of said second aspect of the invention, transmitter means can be embodied in any suitable manner(s). At least one said responder and at least one said transmitter means can be movable relative to each other. At least one transmitter means can be a programmer for initially programming and/or reprogramming said at least one memory means. At least one transmitter means can be a base station for initially programming and/or reprogramming said at least one memory means and/or providing interrogation signals S1.

For apparatus of said third aspect of the invention, sensor means can be embodied in any suitable manner(s). At least one said responder and at least one said sensor means can be movable relative to each other. At least one sensor means can comprise a programmer for initially programming and/or reprogramming said at least one memory means. At least one sensor means can comprise a said base station.

Said base station can interrogate at least one said responder for any desired period(s) of time. Interrogation of a plurality of responders can be at different or same times. Said base station can be adapted to change interrogation period(s) or receiver characteristic(s) of said base station and/or of responders at different locations. Such a change can be in response to at least one signal S2.

At least one said sensor means can comprise and/or interface with other apparatus, e.g. comprise and/or interface with a computer system, for instance a microprocessor or main frame computer. Such a computer system can comprise e.g. encoder means for generating at least a portion of at least one said code. Said computer system can comprise e.g. decoder means for decoding at least a portion of at least one said code.

In one example, a coded responder is attached to an object; sensor(s) up to e.g. 3 metres away from the responder detect the coded responder; and detected information sensed by the sensor(s) is passed to a microprocessor controller which identifies code and produces relevant output, e.g. to initiate further action.

The following are some examples of some advantages of the present invention:

1. A responder has a receiver to detect a carrier frequency f1. The responder transmits a carrier frequency f2 that is in mathematical relationship with carrier frequency f1 and modulated by coded information stored in an integrated circuit forming part of this example of the responder.

2. Carrier frequency f2 can be predetermined by programming the memory of a responder, the programming being binary coded information that enables or changes the mathematical relationship of carrier frequency f2 to carrier frequency f1.

3. Coded signal S2 can be adapted to contain information for affecting at least one mode of operation of at least one sensor means responsive to the responder.

4. Coded signal S2 can be sensed so as to detect the mathematical relationship, and enable action to be taken or not taken upon the result of that sensing, e.g. by displaying information or passing information to e.g. a microprocessor for further processing.

5. A responder can be programmed without physical connection to a programmer, and retain programmed data for the life of a battery for energising the responder.

6. Data retained by a responder can be changed by reprogramming the responder.

7. Data retained by a responder can be in simple binary arithmetic, ASCII arithmetic, or BCD arithmetic.

8. Said sensor means can change the receiver characteristic or interrogation length of responders so as to examine a plurality of responders in the same detection region.

9. A responder can allow for sampling of fewer data bits in a sensed bit code, so as to decrease interrogation time of the responder.

10. When individual ones of a plurality of responders transmit their signals S2 at any time, suitable said sensor means can "see" a composite signal S2 comprising those transmitted signals, and be adapted to identify the composite signal as an indication of the presence of each of those responders. Said sensor means can be adapted to process said composite signal so as to identify components respectively corresponding to individual ones of said plurality of responders. This identification can use any suitable mathematical techniques, e.g. by referring to code structure(s) of individual responders, for instance when said sensor means is programmed with these code structure(s). Said sensor means can comprise and/or interface with a computer system (e.g. a microprocessor) that can be used to identify those components.

11. Said sensor means can decode code from a data stream obtained from at least one signal S2, e.g. from a said composite signal S2. Decoding can be provided of e.g. optional encryption of scrambled information that might have been programmed into at least one said responder.

12. Redundant data bits from a data stream obtained from signal S2 can be used e.g. to provide automatic data correction at said sensor means before said sensor means takes further action.

13. Responders can be manufactured from identical components but be programmed differently to enable different tasks to be performed by separate responders.

14. A responder's logic circuitry can comprise a programming clock receiver for signal S4 such that by increasing the sensitivity of that receiver the responder can be programmed at a distance from e.g. a base station or other separate controller.

15. A modulated carrier electromagnetic wave of radio frequency can be demodulated by providing the responder with a passive network at the front end of the responder's receiver means such that the transmitted carrier of signal S1 can be of a higher frequency than the maximum clock rate of the responder's logic circuitry.

16. Responders emitting signals S2 that are not compatible with required interrogation can be rejected, thereby providing unique integrity and security.

17. A responder's programming clock output can be gated with respect to the clock input of the responder's memory. Gate circuitry can have an input controlled by delay from at least one binary counter.

18. The memory of a responder can receive data when gate circuitry enables a programming clock signal to be applied to the memory.

19. Available data bits in a code can be used to control output frequency of signal S2 and corresponding automatic aerial tuning.

20. Available data bits in a code can be used to control current consuming devices (e.g. resistors) so as to enable a preset power unit life for said responder.

21. Available data bits in a code can be used to indicate the state of a source of power to said responder.

22. A plurality of responders, or separate ones thereof, can be identified at any one time up to the total number of data bits in use in a particular system of code used.

23. A plurality of data bits of a code can be used to identify selected pluralities of responders, e.g. so as to indicate or identify individual pluralities of responders.

It will be appreciated that said signal S2 can be adapted to contain information for affecting at least one mode of operation of at least one sensor means responsive to said responder.

A base station (or programmer) can have at least one mode of operation responsive to at least one signal S2, different signals S2 being able to produce e.g. a change in mode of operation of said base station, for instance to reject a code contained by a signal S2, and/or modify a code in a signal S1 so as to reprogram at least one responder with another code. Said base station (or programmer) can comprise changer means for changing at least one of the following parameters of said base station (or programmer) in response to at least one signal S2, or other instruction: receiver characteristic(s); reception time(s); transmission time(s); transmitter characteristic(s). That changer means can be controlled in any suitable manner(s), e.g. by said logic means. Said base station (or programmer) and at least one said responder can be inter-related by means of signals S1, S2 and said codes so as to enable a dialogue to be carried out between said base station (or programmer) and at least one said responder. For example, said base station (or programmer) and a plurality of said responders can be adapted such that said base station (or programmer) can identify at least one plurality of said responders and/or at least one individual responder of at least one plurality of said responders.

Said base station (or programmer) can transmit signal S1 for any period of time, thereby enabling said base station (or programmer) to interrogate at least one said responder for any desired period of time.

In the accompanying drawings, which are given by way of example:

Fig. 1 shows schematic circuitry for one embodiment of a base station according to the present invention;

Fig. 2 shows schematic circuitry for one embodiment of a responder according to the present invention.

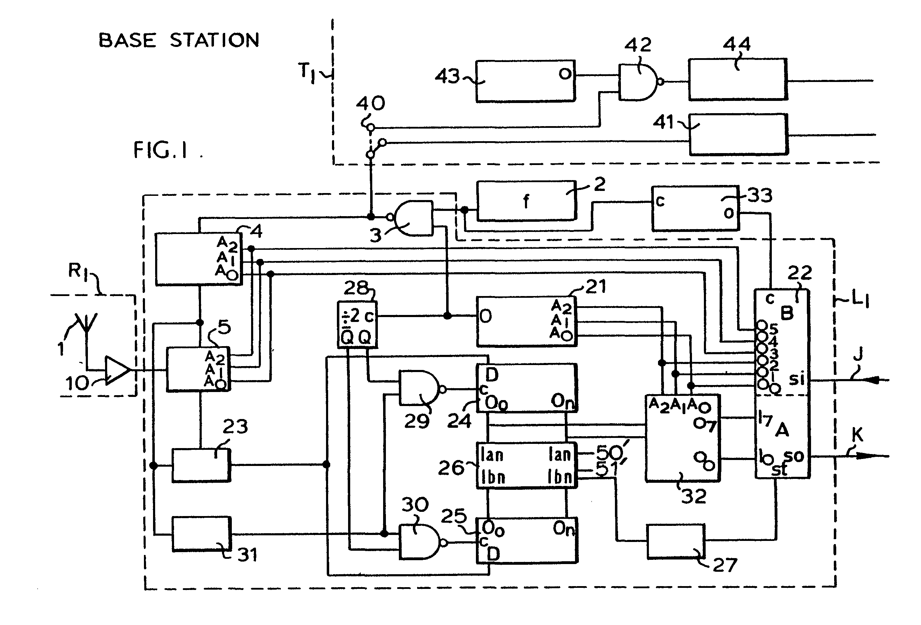

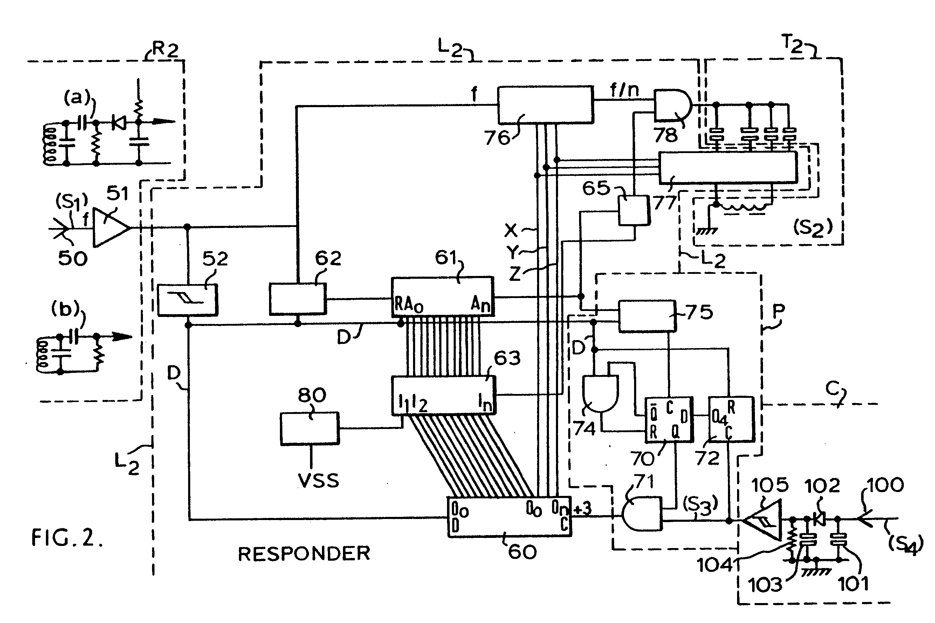

The circuits of Figs. 1 and 2 are adapted to operate in accordance with the above-mentioned preferred mathematical relationship

$$\frac{f1}{f2} = n$$

In Fig. 1, the base station is a transmitter/receiver apparatus having a master oscillator 2 (e.g. a crystal controlled oscillator) resonating at a master frequency f that controls carrier continuous electromagnetic wave frequency transmitted by a transmitter system shown in box $T_1$. The frequency f can have any value, subject to the frequency of the maximum clock rate of the responder (Fig. 2), and subject to any frequency restriction prescribed by a licensing authority. The frequency f passes from master oscillator 2 to one input of NAND gate 3. The other input of gate 3 is connected to programmable, mark-space, monostable device 21 (see later below) in a logic system $L_1$. Device 21 is programmable by data selector 32 so as to control the period(s) of time signals are switched on (i.e. mark) to the period(s) of time signals are switched off (i.e. space), for signals to NAND gate 3 and flip flip 28 (see later below). Device 21 can have any suitable oscillator means and gate means for providing that switching. The output of gate 3 passes the frequency f to transmitter system $T_1$ and to programmable divider 4. An integrated circuit 22 within logic system $L_1$ sets both divider 4 and a programme phase comparator 5 connected to the output of divider 4 (which provides reference timing data), so that the operating and capture ranges of comparator 5 are in accordance with the receiver system comprising detector 10 shown in box $R_1$ and the bandwidth of aerial 1 of receiver system $R_1$, such that only signals from the responder (Fig. 2) compatible both in frequency and phase will be processed by base station. Data in the form of pulse position modulation (i.e. PPM) generated by comparator 5 from signals from detector 10 and divider 4 are fed from comparator 5 into a data sampling unit 23 in logic system $L_1$ together with timing data from divider 4, and checked in sampling unit 23 for data content and errors in data frames before being passed to temporary holding registers 24, 25 in logic system $L_1$. Each register 24 or 25 is a serial to parallel converter, whose register capacity is equal to the maximum code length to be stored by that register. The outputs of registers 24, 25 are fed to a magnitude comparator 26. The comparator 26 determines whether or not the totals in register 24, 25 are greater than, less than, or equal to one another. If the total entered in register 24 equals that in register 25, then a data available flag can be set to provide a strobe pulse generated in monostable strobe generator 27, or utilised in any other way, e.g. request for interrupt processing of a multiprocess (not shown). The strobe pulse is addressed to section A of integrated circuit 22 so as to indicate that data on lines $I_0$ to $I_7$ (only lines $I_0$ and $I_7$ are shown) are valid during the duration of the strobe pulse.

Transmitter $T_1$ includes switch 40 for enabling master frequency f from gate 3 to go either to a first transmitter 41 or to one input of NAND gate 42. The second input of gate 42 is connected to an oscillator 43 having a higher resonance frequency than frequency f. Gate 42 enables a second transmitter 44 to transmit or not transmit frequency from oscillator 43.

The length of code received by receiver system $R_1$ is controlled by a signal from the programmable, markspace, monostable device 21 present in logic system $L_1$. The device 21 determines the period of transmission time from transmitter system $T_1$. The device 21 enables access time for interrogation of the responder (Fig. 2) to be tailored to meet the degree of acceptance in the environment of the responder, e.g. the number of data bits desired times frame width equals access time required, e.g. $48 \times 4$ ms = 192 ms. Transmission from the base station can be switched off for e.g. a minimum of 10 ms to permit the responder (Fig. 2) to reset counts etc. An output from the device 21 is coupled to an input of gate 3, and enables an input of flip flop unit 28 whose two outputs Q, $\bar{Q}$ pass via first inputs of the respective NAND gates 29, 30 to registers 24, 25. Flip flop 28 requires two successive pulse inputs for providing one pulse output. The second inputs of gates 29, 30 are coupled together and connected to a monostable delay unit 31, which is connected to a line coupling programmable divider 4 and phase comparator 5, and also connected to sampling unit 23. The delay unit 31 enables input data to registers 24, 25 to settle before entering those registers.

Operation of decoding provided by the base station can be expanded to sample groups of data via data selector 32 in logic system $L_1$, and to decypher encrypted code. Thus, the decoding can expand the number of possible codes attainable by e.g. simple binary arithmetic.

Integrated circuit 22 interfaces between circuitry shown in Fig. 1 and other circuitry (not shown). Line J provides serial input addressed to section B of circuit 22. Line K provides serial output from circuit 22. Integrated circuit 22 provides a clock signal to Baud rate generator 33 that provides another clock signal. The generator 33 is coupled to a line connecting oscillator 2 to gate 3. The integrated circuit 22 has two sections, Section A, Section B. The Section A of circuit 22 is coupled to eight output stages (shown as $O_0$ to $O_7$) of data selector 32. Section B of circuit 22 has three outputs (shown as $O_0$ to $O_2$) coupled to three inputs (shown as $A_0$ to $A_2$) of data selector 32; the three outputs are also coupled to corresponding inputs of device 21. Thee further outputs (shown as $O_3$ to $O_5$) of the circuit 22 are coupled to lines each respectively connected to inputs of divider 4 and comparator 5.

In Fig. 2, the responder is a receiver/transmitter having a receiver system shown in box $R_2$ and a transmitter system shown in box $T_2$. Receiver system $R_2$ contains a detector 51 for detecting carrier wave frequency f in the transmission from the base station. Receiver system $R_2$ contains alternative optional tuned circuits (a), (b) which can be energised by aerial 50 so as to provide signals for use in receiver system $R_2$.

A demodulator 52 (which can include a Schmidt trigger circuit for providing acceptable logic levels of a demodulated signal) responds to a signal of sufficient amplitude from detector 51, so that demodulator 52 feeds an output signal into a release line D leading e.g. to programmable memory 60 in a logic system shown in the box $L_2$. The release line D can enable a signal from demodulator 52 to release (i.e. unlock) a counter 61, such that the carrier frequency f will enable the released counter 61 to count as long as that frequency is present. The portion of release line D which couples demodulator 52 and counter 61 is also connected to an input of data frame width control unit 62. The control unit 62 sets the nominal frame width (i.e. the duration of two successive data bits) of the data to be processed by the logic system $L_2$. After a delay preset in control unit 62, an output of control unit 62 is fed to counter 61. Counter 61 has a plurality of outputs coupled to inputs of data multiplexer 63 so as to address binary encoded signals to those inputs. As counter 61 counts, the multiplexer 63 samples bits stored in programmable memory 60. Outputs from counter 61 and from multiplexer 63 are fed into the input of pulse position modulator 65, whose output is to modulate the transmitter system $T_2$.

A programming control system shown as a subdivided box P of logic system $L_2$ is used to enable or disenable entry of data from release or reset line D into reprogrammable memory 60. A programme enable flip flop 70 has an output Q coupled to an input of AND gate 71, whose other input is coupled both to a clocking system shown in box C which is part of the logic system $L_2$, and to a register 72 having an output coupled to input D of flip flop 70. Clock signals S3 from the clocking system C cannot reach the corresponding input of memory 60 when the gate 71 is in a blocking mode. Clocking system C can receive a signal S4 via an aerial or other means, so as to enable signal S3 to be provided. The Q output of flip flop 70 can only be changed by preloading a count into register 72 from the clocking system C, and providing carrier frequency f is present to release line D. When line D is released by carrier frequency f, and after sufficient time has passed to enable flip flop 70 to be clocked via register 72, the clock system C is modulated so that the output of register 72 is changed to enable change in input D of flip flop 70. When carrier frequency f has enable sufficient clocking of flip flop 70, the outputs Q, $\bar{Q}$ of flip flop 70 are inverted, the Q output then enabling the clocking system C via AND gate 71 to communicate with memory 60, and the $\bar{Q}$ output causing AND gate 74 to prevent reset line D from affecting flip flop 70 via gate 74 coupled to flip flop 70's input R. The mode of flip flop 70 remains unchanged until the next clocking period regardless of the state of reset line D.

Counter 61 provides a clock signal to a line interconnecting pulse position modulator 65 and a divide by two flip flop 75 (which delays clock output from the counter 61). An output of flip flop 75 is coupled to an input of the flip flop 70. The programming clocking system C cannot reach memory 60 during the blocking mode of AND gate 71, whose other input is controlled by the Q output of flip flop 70. When the clocking system C can affect memory 60, data will be shifted in serial form into the memory 60 from line D.

Memory 60 has three address lines XYZ for enabling a maximum of eight signals to address programmable divider 76 for it to divide the carrier frequency by a said number n. Divider 76 has an input coupled to a line connected to output of detector 51, and is also coupled to an input of width control unit 62. The XYZ lines are also coupled to an "analogue one of eight" multiplexer 77, so that at least one input of a possible eight inputs can be passed at any one time by multiplexer 77 to transmitter $T_2$. The data lines X, Y, Z can enable output frequency and tuning of transmitter $T_2$ to be determined. Output of divider 76 and output of modulator 65 are coupled to inputs of AND gate 78, whose output is coupled to transmitter $T_2$.

Irrespective of the code length transmitted by the transmitter system $T_2$, the train of transmitted data can contain a start bit for synchronisation, and a bit for indicating a low level of charge of a battery supply (not shown) for operating the responder, thereby enabling precautionary action to be taken before the battery charge level has fallen to cause corruption or loss in the code. Voltage comparator 80 is coupled to an input of multiplexer 63, and can be utilised in said charge level indicating.

In Fig. 1, optional lines 50', 51' enable two outputs from magnitude comparator 26 to be utilised in any useful way. The flip flop 28 is shown with "÷2" so as to indicate that flip flop 28 changes from one mode of operation to an opposite mode of operation, in order to enable data acquisition in register 24 or in register 25.

The truth table of any said AND gate is:

| Input A | Input B | Output C |
|---------|---------|----------|
| 1 | 1 | 1 |
| 1 | 0 | 0 |
| 0 | 1 | 0 |
| 0 | 0 | 0 |

The truth table of any said NAND gate is:

| Input A | Input B | Output C |
|---------|---------|----------|
| 1 | 1 | 0 |
| 1 | 0 | 1 |
| 0 | 1 | 1 |
| 0 | 0 | 1 |

Clocking system C provides one example of a programming enable clock responsive to an incoming signal S4 that is a continuous electromagnetic wave of radio frequency and amplitude modulated with data. Clocking system C receives signal S4 via an optional aerial 100. Signal S4 could be received via some other means, e.g. permanent or temporary physical linkage with a programmer. A responder can be programmed at any suitable distance from sources of signals S1, S4, without physical linkage to those sources when those signals are suitable, e.g. suitable radio frequency signals. Clocking system C has an aerial tuning capacitor 101, a diode rectifier 102, a demodulation circuit formed by capacitor 103 and resistor 104, and a Schmitt trigger circuit 105 for providing acceptable logic levels of signal S3.

Components for circuitry according to the accompanying drawings can be constituted in any suitable manner(s). One example of an integrated circuit for use in embodying e.g. a responder can utilise integrated circuit No. OM 1830 of Mullard Limited. In general, it will be appreciated that any suitable modification(s) can be made to circuitry shown in the accompanying drawings, or described in the description given above before the first reference to the drawings. For example, any suitable logic device (for instance a different kind of logic gate) and/or any suitable logic circuitry can be utilised in providing a said modification. Furthermore, any suitable frequency(s) can be used for any carrier frequency or any intermediate frequency. A frequency can be provided with information by means of any suitable modulation(s). The present invention can be utilised in any suitable application, and in any suitable environment. For example, a responder can be attached to something or be implanted in something.

## Claims

1. A responder, comprising:
(a) receiver means ($R_2$) for receiving a transmitted signal S1 comprising a frequency f1;
(b) generator means (76) for generating a carrier frequency f2 of a carrier component of a transmittable signal S2 comprising carrier frequency f2 and code;
(c) logic means ($L_2$) for enabling signal S2 to be in mathematical relationship with signal S1, said logic means comprising:

(i) at least one memory means (60), adapted to be programmed for storing code, or storing said code,
(ii) at least one modulation means (65, 78) for modulating said carrier component of signal S2, the modulation being under control of at least a portion of said stored code, such that signal S2 will be in coded mathematical relationship with signal S1,
(iii) at least one clock means (61, 62, 63) for providing at least one clocking signal for enabling or disenabling access of at least a portion of said stored code to said at least one modulation means;

characterised by said at least one memory means is adapted to be programmed or reprogrammed with said code by receiving at least one programming signal to be provided by non-physical linkage between said responder and at least one source of said at least one programming signal, said at least one programming signal comprising code to be routed to said at least one memory means so as to provide said stored code.

2. A responder as claimed in claim 1, characterised by said receiver means is adapted to receive a transmitted signal S1 wherein frequency f1 is in a bandwidth range of Kilo Herz frequencies.

3. A responder as claimed in claim 1 or 2, characterised by said receiver means comprises a

network ($R_2$, a, b) such that frequency f1 will be higher than the maximum clock rate of said at least one clocking signal of said at least one clock means (iii).

4. A responder as claimed in any one of claims 1 to 3, characterised by said generator means is adapted to generate a carrier frequency f2 in a bandwidth range of Kilo Herz frequencies.

5. A responder as claimed in any one of claims 1 to 4, characterised by said generator means comprises divider means (76) for dividing frequency f1, said divider means optionally being programmable or reprogrammable.

6. A responder as claimed in claim 5, characterised by said divider means enables frequency f1 and carrier frequency f2 to be characterised by:

$$\frac{f1}{f2}=n$$

in which n is any whole or fractional number other than zero, n optionally being substantially 2.

7. A responder as claimed in any one of claims 1 to 6, characterised by said logic means is adapted such that at least a portion of said at least one programming signal will be constituted by at least a portion of signal S1 or be obtained from another source.

8. A responder as claimed in claim 7, characterised by a change in at least a portion of code comprised by said at least one programming signal will produce change in code in signal S2.

9. A responder as claimed in any one of claims 1 to 8, characterised by said at least one modulation means is adapted to provide a pulse modulation of carrier frequency f2.

10. A responder as claimed in any one of claims 1 to 9, characterised by said logic means comprises gate circuitry (70, 71, 72, 74, 75) adapted to be at least partly controllable by:

(i) at least a plurality of signals derived in said responder from signal S1, wherein:

(a) a first derived signal from signal S1 is a frequency derivative of frequency f1;
(b) a second derived signal from signal S1 is demodulation from that signal S1;
and/or

(ii) at least a portion of a signal S3 receivable by said gate circuitry.

11. A responder as claimed in claim 10, characterised by said gate circuitry has 3 inputs, each respectively for said first and second derived signals and for signal S3; and an output for addressing said at least one memory means.

12. A responder as claimed in claim 10 or 11, characterised by said gate circuitry will enable said access to said at least one memory means, such that said second derived signal provides data input to said at least one memory means; and signal S3 will provide clock signals to said at least one memory means so as to enable or disenable entry of that data into said at least one memory means.

13. A responder as claimed in any one of claims 1 to 12, characterised by comprising at least one further clock means (C), for providing at least one clocking signal (S3) for enabling or disenabling access of at least a portion of said at least one programming signal to said at least one memory means.

14. A responder as claimed in claim 13, characterised by said at least one further clock means is responsive to an input signal S4 for enabling clocking signal(s) to be provided by said at least one further clock means.

15. A responder as claimed in any one of claims 1 to 14, characterised by comprising a single integrated circuit.

16. A responder as claimed in any one of claims 1 to 14, characterised by comprising a plurality of integrated circuits.

17. A responder as claimed in any one of claims 1 to 16, characterised by being coupled to a limited life source of energy for energising said responder.

18. A responder as claimed in claim 17, characterised by said limited life source of energy comprises a battery, a capacitor, or a fuel cell.

19. Apparatus, comprising:

at least one responder as claimed in any one of claims 1 to 18; and

transmitter means for transmitting at least one signal S1 to at least one said responder.

20. An identification or security system, characterised by at least one responder as claimed in any one of claims 1 to 19; or by at least one apparatus as claimed in claim 19.

21. A system as claimed in claim 20, characterised by being adapted for access control, stock control, or identification of at least one individual that is animate or inanimate.

**Patentansprüche**

1. Antwortgeber, bestehend aus

(a) Empfängermitteln ($R_2$) zum Empfangen eines übertragenen Signals S1 mit einer Frequenz f1;

(b) Generatormitteln (76) zum Erzeugen einer Trägerfrequenz f2 einer Trägerkomponente eines übertragbaren Signals S2 mit der Trägerfrequenz f2 und einem Code;

(c) Logikmitteln ($L_2$) zum Befähigen des Signals S2, in mathematischer Beziehung zum Signal S1 zu stehen, wobei diese Logikmittel bestehen aus:

(i) wenigstens einem Speichermittel (60), welches geeignet ist, zum Speichern eines Codes oder zum Speichern des genannten Codes programmiert zu werden,

(ii) wenigstens einem Modulationsmittel zum Modulieren der genannten Trägerkomponente des Signals S2, wobei die Modulation unter der Kontrolle von wenigstens einem Teil des genannten gespeicherten Codes steht, derart, daß sich das Signal S2 in codierter mathematischer Beziehung zu dem Signal S1 befindet,

(iii) wenigstens einem Taktgebermittel zum Schaffen wenigstens eines Taktsignals zum Ermöglichen oder Verhindern des Zugriffs von wenigstens einen Teil des genannten gespeicherten Codes zu dem mindestens einen Modulationsmittel,

dadurch gekennzeichnet, daß das wenigstens eine Speichermittel so ausgebildet ist, daß es mit dem genannten Code durch Empfangen wenigstens eines Programmiersignals, das durch nicht-körperliche Verknüpfung zwischen dem Antwortgeber und wenigstens einer Quelle des genannten wenigstens einen Programmiersignals zu schaffen ist, programmierbar oder reprogrammierbar ist, wobei das genannte wenigstens eine Programmiersignal einen Code enthält, der dem wenigstens einen Speichermittel zur Schaffung des genannten gespeicherten Codes zuleitbar ist.

2. Antworgeber nach Anspruch 1, dadurch gekennzeichnet, daß das Empfängermittel so ausgebildet ist, daß es ein übertragenes Signal S1, in dem sich die Frequenz f1 im Bandbreitenbereich von kiloHertz-Frequenzen befindet, empfängt.

3. Antwortgeber nach Anspruch 1 oder 2, dadurch gekennzeichnet, daß das Empfängermittel ein Netzwerk ($R_2$, a, b) solcher Art aufweist, daß die Frequenz f1 höher als die maximale Taktrate des genannten wenigstens einen Taktsignals des wenigstens einen Taktgebermittels (iii) beträgt.

4. Antwortgeber nach einem der Ansprüche 1 bis 3, dadurch gekennzeichnet, daß das Generatormittel so ausgebildet ist, daß es eine Trägerfrequenz f2 in einem Bandbreitenbereich von kiloHertz-Frequenzen erzeugt.

5. Antwortgeber nach einem der Ansprüche 1 bis 4, dadurch gekennzeichnet, daß das Generatormittel aus einem Teilermittel (76) zum Teilen der Frequenz f1 besteht, wobei dieses Teilermittel willkürlich programmierbar oder reprogrammierbar ist.

6. Antwortgeber nach Anspruch 5, dadurch gekennzeichnet, daß das Teilermittel die Frequenz f1 und die Trägerfrequenz f2 in die Lage versetzt, durch die Beziehung

$$\frac{f1}{f2} = n$$

bestimmt zu werden, worin n eine ganze Zahl oder ein Bruch verschieden von Null und n wahlweise im wesentlichen 2 ist.

7. Antwortgeber nach einem der Ansprüche 1 bis 6, dadurch gekennzeichnet, daß das Logikmittel so ausgebildet ist, daß zumindest ein Teil des genannten wenigstens einen Programmiersignals aus wenigstens einem Teil des Signals S1 gebildet oder aus einer anderen Quelle erhalten ist.

8. Antwortgeber nach Anspruch 7, dadurch gekennzeichnet, daß eine Änderung in wenigstens einem Teil des in dem genannten wenigstens einen Programmiersignal enthaltenen Codes eine Änderung im Code im Signal S2 hervorruft.

9. Antwortgeber nach einem der Ansprüche 1 bis 8, dadurch gekennzeichnet, daß mindestens ein Modulationsmittel so ausgebildet ist, daß es eine Impulsmodulation der Trägerfrequenz f2 schafft.

10. Antwortgeber nach einem der Ansprüche 1 bis 9, dadurch gekennzeichnet, daß das Logikmittel eine Gatterschaltung (70, 71, 72, 74, 75) umfaßt, die so ausgebildet ist, daß sie wenigstens teilweise steuerbar ist von:

(i) wenigstens einer Anzahl von Signalen, die im Antwortgeber von dem Signal S1 abgeleitet sind, wobei

(a) ein erstes vom Signal S1 abgeleitetes Signal eine von der Frequenz f1 ableitbare Frequenz ist;
(b) ein zweites vom Signal S1 abgeleitetes Signal eine Demodulation vom Signal S1 ist; und/oder

(ii) wenigstens einem Teil eines Signals S3, das von der Gatterschaltung aufnehmbar ist.

11. Antwortgeber nach Anspruch 10, dadurch gekennzeichnet, daß die Gatterschaltung 3 Eingänge für jeweils das erste und das zweite abgeleitete Signal sowie für das Signal S3 und einen Ausgang zum Adressieren des wenigstens einen Speichermittels aufweist.

12. Antwortgeber nach Anspruch 10 oder 11, dadurch gekennzeichnet, daß die Gatterschaltung den Zugriff zu dem wenigstens einen Speichermittel ermöglicht, derart, daß das zweite abgeleitete Signal eine Dateneingabe zu dem wenigstens einen Speichermittel schafft, und daß das Signal S3 Taktsignale zu dem wenigstens einen Speichermittel schafft, derart, daß die Eingabe dieser Daten in das wenigstens eine Speichermittel ermöglicht oder verhindert wird.

13. Antwortgeber nach einem der Ansprüche 1 bis 12, gekennzeichnet, durch das Vorhandensein wenigstens eines weiteren Taktgebermittels (C) zum Schaffen wenigstens eines Taktsignals (S3) zum Ermöglichen oder Verhindern des Zugriffs von wenigstens einem Teil des wenigstens einen Programmiersignals zu dem wenigstens einen Speichermittel.

14. Antwortgeber nach Anspruch 13, dadurch gekennzeichnet, daß das wenigstens eine weitere Taktgebermittel auf ein Eingangssignal S4 anspricht, welches die Schaffung von einem oder mehreren Taktsignalen durch das wenigstens eine weitere Taktgebermittel ermöglicht.

15. Antwortgeber nach einem der Ansprüche 1 bis 14, dadurch gekennzeichnet, daß er aus einem einzigen integrierten Schaltkreis besteht.

16. Antwortgeber nach einem der Ansprüche 1 bis 14, dadurch gekennzeichnet, daß er aus einer Vielzahl integrierter Schaltkreise besteht.

17. Antwortgeber nach einem der Ansprüche 1 bis 16, dadurch gekennzeichnet, daß er an eine Energiequelle von begrenzter Lebensdauer angeschlossen ist.

18. Antwortgeber nach Anspruch 17, dadurch gekennzeichnet, daß die Energiquelle beschränkter Lebensdauer eine Batterie, ein Kondensator oder eine Brennstoffzelle ist.

19. Apparat, bestehend aus
wenigstens einem Antwortgeber nach einem der Ansprüche 1 bis 18; und
Sendermitteln zum Übertragen wenigstens eines Signals S1 zu dem wenigstens einen Antwortgeber.

20. Erkennungs- oder Sicherheitssystem, gekennzeichnet durch wenigstens einen Antwortgeber nach einem der Ansprüche 1 bis 18; oder durch wenigstens einen Apparat nach Anspruch 19.

21. System nach Anspruch 20, dadurch gekennzeichnet, daß es sich für eine Zugriffssteuerung, eine Speichersteuerung oder die Erkennung von wenigstens einer lebenden oder toten Einzelheit eignet.

**Revendications**

1 Répondeur comportant:
a) des moyens de réception (R2) pour recevoir un signal (S1) transmis, comprenant une fréquence f1;
b) des moyens générateurs (76) pour générer une fréquence de porteuse f2 d'une composante porteuse d'un signal transmissible S2, comportant la fréquence porteuse f2 et le code;
c) des moyens logiques (L2) pour permettre au signal S2 d'être en relation mathématique avec le signal S1, lesdits moyens logiques comprenant:

(i) au moins un moyen de mémoire (60), adapté pour être programmé afin de mémoriser le code ou mémorisant ledit code,
(ii) au moins un moyen de modulation (65, 78) pour moduler ladite composante porteuse du signal S2, la modulation étant commandée par au moins une partie dudit code mémorisé, de sorte que le signal S2 sera en relation mathématique codée avec le signal S1,
(iii) au moins un moyen d'horloge (61, 62, 63) pour fournir au moins un signal d'horloge afin de permettre ou d'interdire l'accès d'au moins une partie dudit code mémorisé audit au moins un moyen de modulation,

caractérisé par le fait que ledit au moins un moyen de mémoire est adapté pour être programmé ou déprogrammé avec ledit code lorsqu'il reçoit au moins un signal de programmation devant être fourni par une liaison non physique entre ledit répondeur et au moins une source dudit au moins un signal de programmation, ledit au moins un signal de programmation comportant le code devant être envoyé audit au moins un moyen de mémoure afin de trouver ledit code mémorisé.

2. Répondeur selon la revendication 1, caractérisé par le fait que lesdits moyens de réception sont adaptés pour recevoir un signal transmis S1, la fréquence f1 étant dans une largeur de bande de fréquences de kiloHertz.

3. Répondeur selon la revendication 1 ou 2, caractérisé par le fait que lesdits moyens de réception comportent un circuit (R2, a, b) tel que la fréquence f1 sera supérieure au rythme d'horloge maximum dudit au moins un signal d'horloge dudit au moins un moyen d'horloge (iii).

4. Répondeur selon l'une quelconque des revendications 1 à 3, caractérisé par le fait que lesdits moyens générateurs sont adaptés pour générer une fréquence porteuse f2 dans une largeur de bande de fréquences des kiloHertz.

5. Répondeur selon l'une quelconque des revendications 1 à 4, caractérisé par le fait que lesdits moyens de générateur comportent des moyens diviseurs (76) pour diviser la fréquence f1, lesdits moyens diviseurs peuvent être au choix programmables ou non programmables.

6. Répondeur selon la revendication 5, caractérisé par le fait que lesdits moyens diviseurs permettent à la fréquence f1 et à la fréquence porteuse f2 d'être caractérisés par:

$$\frac{f1}{f2}=n$$

où n est n'importe quel nombre entier ou fractionnaire autre que zéro, n étant optionnellement sensiblement égal à 2.

7. Répondeur selon l'une quelconque des revendications 1 à 6, caractérisé par le fait que lesdits moyens logiques sont adaptés pour qu'au moins une partie dudit au moins un signal de programmation soit constituée par au moins une partie du signal S1 ou soit obtenu d'une autre source.

8. Répondeur selon la revendication 7, caractérisé par le fait qu'un changement dans au moins une partie du code compris par ledit au moins un programme produit un changement dans le code du signal S2.

9. Répondeur selon l'une quelconque des revendications 1 à 8, caractérisé par le fait que ledit au moins un moyen de modulation est adapté pour procurer une modulation d'impulsion de la fréquence porteuse f2.

10. Répondeur selon l'une quelconque des revendications 1 à 9, caractérisé par le fait que lesdits moyens logiques comportent un circuit de porte (70, 71, 72, 74, 75) adapté pour être au moins partiellement commandable par

(i) au moins une pluralité de signaux dérivés dans ledit répondeur par le signal S1:

a) un premier signal dérivé du signal S1 étant une fréquence dérivée de la fréquence de f1;

b) un second signal dérivé du signal S1 étant une démodulation de ce signal S1; et/ou

(ii) au moins une partie du signal S3 recevable par ledit circuit de porte.

11. Répondeur selon la revendication 10, caractérisé par le fait que ledit circuit de porte à trois entrées, chacune respectivement pour lesdits premier et second signaux dérivés et pour le signal S3; et une sortie pour adresser ledit au moins un moyen de mémoire.

12. Répondeur selon la revendication 10 ou 11, caractérisé par le fait que ledit circuit de porte va activer ledit accès audit au moins un moyen de mémoire, de sorte que ledit second signal dérivé fournisse une information d'entrée audit au moins un moyen de mémoire; et que le signal S3 va procurer les signaux d'horloge audit au moins un moyen de mémoire de façon à activer ou désactiver l'entrée de cette information dans ledit au moins un moyen de mémoire.

13. Répondeur selon l'une quelconque des revendications 1 à 12, caractérisé par le fait qu'il comporte au moins un autre moyen d'horloge (C) pour procurer au moins un signal de rythme (S3) pour activer ou désactiver l'accès d'au moins une partie dudit au moins un signal de programmation audit au moins un moyen de mémoire.

14. Répondeur selon la revendication 13, caractérisé par le fait que ledit au moins un autre moyen d'horloge réagit à un signal d'entrée S4 pour permettre au (aux) signal (signaux) de rythme d'être émis par ledit au moins un autre moyen d'horloge.

15. Répondeur selon l'une quelconque des revendications 1 à 14, caractérisé par le fait qu'il comporte un seul circuit intégré.

16. Répondeur selon l'une quelconque des revendications 1 à 14, caractérisé par le fait qu'il comprend une pluralité de circuits intégrés.

17. Répondeur selon l'une quelconque des revendications 1 à 16, caractérisé par le fait qu'il est couplé à une source d'énergie à durée de vie limitée pour fournir de l'énergie audit répondeur.

18. Répondeur selon la revendication 17, caractérisé par le fait que ladite source d'énergie à durée de vie limitée comporte une batterie, une capacité ou une cellule à carburant.

19. Appareil comportant:
au moins un répondeur selon l'une quelconque des revendications 1 à 18; et
des moyens de transmission d'au moins un signal S1 à au moins un tel répondeur.

20. Système d'identification ou de sécurité, caractérisé par au moins un répondeur selon l'une quelconque des revendications 1 à 19; ou par au moins un appareil selon la revendication 19.

21. Système selon la revendication 20, caractérisé par le fait qu'il est adapté pour une commande d'accès, une commande de stockage ou l'identification d'au moins un individu animé ou inanimé.

FIG.1.

BASE STATION

0 082 690

FIG. 2.